# EUROPEAN PATENT SPECIFICATION

(11) **EP 4 005 780 B1**
(45) Date of publication and mention of the grant of the patent: **23.08.2023**
(21) Application number: 20894946.1
(22) Date of filing: 14.12.2020
(51) Int. Cl.: B29C 70/34, B29C 35/02, B29C 65/30, H05B 3/34, H05B 3/36, B29C 70/38, H05B 3/14, B29K 105/00

(54) **FLEXIBLE CARBON NANOTUBE FILM SELF-HEATING PLATFORM FOR ASSISTING IN AUTOMATED PLACEMENT AND METHOD**
SELBSTERHITZENDE PLATTFORM MIT FLEXIBLER KOHLENSTOFFNANORÖHRCHENSCHICHT ZUR UNTERSTÜTZUNG VON AUTOMATISCHER PLATZIERUNG UND VERFAHREN
PLATE-FORME AUTOCHAUFFANTE FLEXIBLE À FILM DE NANOTUBES DE CARBONE POUR AIDER AU PLACEMENT AUTOMATISÉ ET PROCÉDÉ ASSOCIÉ

(30) Priority: 29.09.2020 CN 202011049397
(43) Date of publication of application: 01.06.2022
(73) Proprietor: Beijing Aeronautical Science & Technology Research Institute,Commercial Aircraft Corporation of China, Beijing 102211 (CN)
(72) Inventor: LIU, Yanan, Beijing 102211 (CN); ZHU, Minghao, Beijing 102211 (CN); LIU, Chenxiao, Beijing 102211 (CN); LIU, Shugen, Beijing 102211 (CN); FENG, Rongxin, Beijing 102211 (CN)
(74) Representative: Gille Hrabal Partnerschaftsgesellschaft mbB Patentanwälte
(86) International application number: PCT/CN2020/135996
(87) International publication number: WO 2022/068070

(56) References cited:
- EP-A1- 2 422 949
- WO-A2-2019/075173
- WO-A2-2019/075173
- CN-A- 110 499 110
- CN-U- 208 479 970
- US-A- 6 018 141
- US-A1- 2018 147 778

## Description

### TECHNICAL FIELD

The present invention relates to the technical field of composite molding, and in particular to a flexible carbon nanotube film self-heating platform and a method for assisting automatic laying.

### BACKGROUND

An automatic laying molding technology is one of automatic composite molding and manufacturing technologies most quickly developed and most effective in recent years and has various advantages such as high efficiency, high laying precision, reliable laying quality and high applicability. In the technology, a multi-degree-of-freedom automatic fiber laying machine or tape laying machine is utilized, a prepreg tape or a width-variable prepreg tape formed by centralizing a plurality of prepreg yarns under a flexible compression roller is laid on the surface of a mould by a tape laying head or a fiber laying head and is heated to be softened and compacted to be shaped. The prepreg yarn may be a thermosetting prepreg, a thermoplastic prepreg or a dry fiber narrow tape. In a laying process, the fiber laying machine/tape laying machine is provided with a heating system so that resin in the narrow tape is softened to have viscosity so as to realize interlayer bonding and shaping.

Most of existing automatic laying tool platforms are of metal structures, and the surfaces of the existing automatic laying tool platforms are kept at a room temperature so as to have a great temperature difference from a prepreg heated to be softened. Therefore, when a first layer of laid prepreg tape is fitted to a mould, a surface, fitted to the mould, of the prepreg is in contact with a cold mould to result in poor viscosity which affects the adhesion with the mould, and thus, the quality is difficult to guarantee. The mould is required to be heated to reduce the temperature difference of the mould with low temperature and the prepreg and keep the viscosity of the prepreg, so that good adhesion is guaranteed. There are few applications of mould heating to laying, however, there have been relatively matured ways for mould heating in other composite molding processes. There are mainly three mould heating ways comprising electric heating, environment heating and built-in pipeline liquid heating (comprising water heating or oil heating). The electric heating way is suitable for a simple small mould and requires a heating component which is complicated in design and mounting; the environment heating means heating for an overall working environment, is suitable for a small sealed environment and is high in cost; and there are more applications of liquid heating in wind power industry, however, the problems of gas tightness and leakage exist in liquid heating, a pollution clearing problem further exists in oil heating, and the heating temperature is nonadjustable due to influences from a boiling point of a liquid. All the above-mentioned methods have defects in an automatic laying assisting process.

Document EP2422949A1 discloses a method and an apparatus for forming composite structures with a curing tool including nano tube impregnated resin and an insulation layer, wherein a vacuum bag system is used to compact a pre-preg material during curing. Document WO2019075173A2 discloses a method for composite processing, where a heating blanket comprising a carbon nanotube structured layer is used for curing composite materials between a mold tool and an air impermeable film with a vacuum valve. Document US20180147778A1 discloses an automated method for producing a fibrous preform on a tool surface, where liquid resin is received via resin infusion.

It is necessary to research a flexible carbon nanotube film self-heating platform for assisting automatic laying to overcome defects in the prior art so as to solve or relieve one or more of the above-mentioned problems.

### SUMMARY

The problem is solved by a flexible carbon nanotube film self-heating platform according to claim 1 and a method using a flexible carbon nanotube film self-heating platform according to claim 5. Preferred embodiments are described in the dependent claims. It can thereby be made the surface of a laying tool have a heating function, a difference of the laying tool and a laying process temperature is reduced, the viscosity of a laid material is increased, and the laying effect is improved.

In one aspect, the present invention provides a flexible carbon nanotube film selt-heating platform tor assisting automatic laying, wherein the self-heating platform comprises an automatic laying mould, a carbon nanotube film and a vacuum bag which are sequentially laid from bottom to top; the carbon nanotube film is connected with a power source by conducting wires; and the vacuum bag is connected with an vacuumizing device by a pipeline.

According to the invention, the carbon nanotube film has an arbitrary area and covers a laying region of the automatic laying mould. The carbon nanotube film has the thickness of 10 µm-l mm and the density of lower than 1g/cm³As the above-mentioned aspect and any one possible implementation, further provided is an implementation in which the area of the carbon nanotube film is greater than that of the laying region of the automatic laying mould and is smaller than the action area of the vacuum bag. The action area of the vacuum bag refers to the area of the vacuumized vacuum bag in contact with the automatic laying mould.

As the above-mentioned aspect and any one possible implementation, further provided is an implementation in which the vacuumizing device is an air pump or an air compression station.

As the above-mentioned aspect and any one possible implementation, further provided is an implementation in which the conducting wires are connected with the edge of the carbon nanotube film by a pressure sensitive adhesive tape.

As the above-mentioned aspect and any one possible implementation, further provided is an implementation in which the vacuum bag is adhered to the automatic laying mould by using a sealant and is configured to cover a region where the carbon nanotube film is located.

In another aspect, the present invention provides a method according to claim 5 using a flexible carbon nanotube film self-heating platform for assisting automatic laying, wherein the method comprises the steps:
S1, cleaning the surface of an automatic laying mould;
S2, laying a carbon nanotube film on the surface of the automatic laying mould, and connecting the carbon nanotube film with a power source by conducting wires;
S3, adhering and fixing a vacuum bag to the surface of the automatic laying mould, and enabling the vacuum bag to cover a region where the carbon nanotube film is located;
S4, vacuumizing the vacuum bag;
S5, heating the carbon nanotube film to a temperature required for laying; and
S6, starting a laying process for laying.

As the above-mentioned aspect and any one possible implementation, further provided is an implementation in which the carbon nanotube film has an arbitrary area and covers a laying region of the automatic laying mould.

As the above-mentioned aspect and any one possible implementation, further provided is an implementation in which when a thermosetting prepreg is laid, the temperature required for laying in step S5 is an ambient temperature, and a power source of the carbon nanotube film is not turned on; and when a thermoplastic prepreg or dry fiber is laid, the power source is turned on to heat the carbon nanotube film to a temperature required by the process.

As the above-mentioned aspect and any one possible implementation, further provided is an implementation in which the tightness between the vacuum bag and the automatic laying mould is required to be guaranteed when the vacuum bag is adhered and fixed in step S3.

As the above-mentioned aspect and any one possible implementation, further provided is an implementation in which the platform is suitable for automatic fiber laying and tape laying processes.

Compared with the prior art, the present invention can achieve the following technical effects: by using the flexible carbon nanotube film self-heating platform for assisting automatic laying, the surface of a laying tool is enabled to have a heating function, a difference of the laying tool and a laying process temperature is reduced, the viscosity of a laid material is increased, the laying effect is improved, the problems that the laying property of the first layer is poor and the first layer of laid material cannot be well fitted to the tool due to an overhigh difference of the surface temperature of an existing metal laying tool and a laying process temperature are solved, the reject rate can be reduced, the laying quality and efficiency can be increased, and the advantages of an automatic laying process can be exerted better; the carbon nanotube film is small in thickness, low in density and incapable of changing the original molding surface or gravity of the mould or generating other interference problems; the flexible carbon nanotube film with high heat conductivity is good in flexibility and capable of well deforming to be fitted to the molding surface of the mould and can be used for complicated moulds with different structures so as to be wide in application range; and the flexible carbon nanotube film is located between the mould and the vacuum bag and is small in thickness so as to be capable of obviously improving the laying effect without affecting the original laying surface.

Of course, when any product provided by the present invention is implemented, it is not always required that all the above-mentioned technical effects are achieved at the same time.

### BRIEF DESCRIPTION OF THE DRAWINGS

In order to more clearly describe technical solutions of embodiments of the present invention, accompanying drawings required to be used in the embodiments will be briefly introduced below.
Fig. 1 is a schematic diagram showing a structure of a flexible non-metal heatable platform provided by an embodiment of the present invention; and
Fig. 2 is a flow diagram showing a using process of a flexible carbon nanotube film self-heating platform provided by an embodiment of the present invention;
in which,
1-automatic laying mould; 2-carbon nanotube film; 3-first conducting wire; 4-second conducting wire; 5-vacuum bag; 6-vacuum pipeline; and 7-vacuumizing device.

### DETAILED DESCRIPTION

In order to better understand the technical solutions of the present invention, the embodiments of the present invention will be described in detail below in combination with the accompanying drawings.

Terms used in the embodiments of the present invention are only for the purpose of describing specific embodiments, rather than limiting the present invention. "a", "the" and "this" in a singular form used in the embodiments and the appended claims of the present invention are also intended to comprise a plural form unless other meanings are clearly expressed in a context.

The present invention provides a flexible non-metal heatable platform for assisting an automatic laying process, by which the surface design of an automatic laying tool is improved on the basis of a flexible carbon nanotube film with high heat conductivity, so that the surface of the laying tool is enabled to have a heating function, a difference of the laying tool and a laying process temperature is reduced, the viscosity of a laid material is increased, and the laying effect is improved.

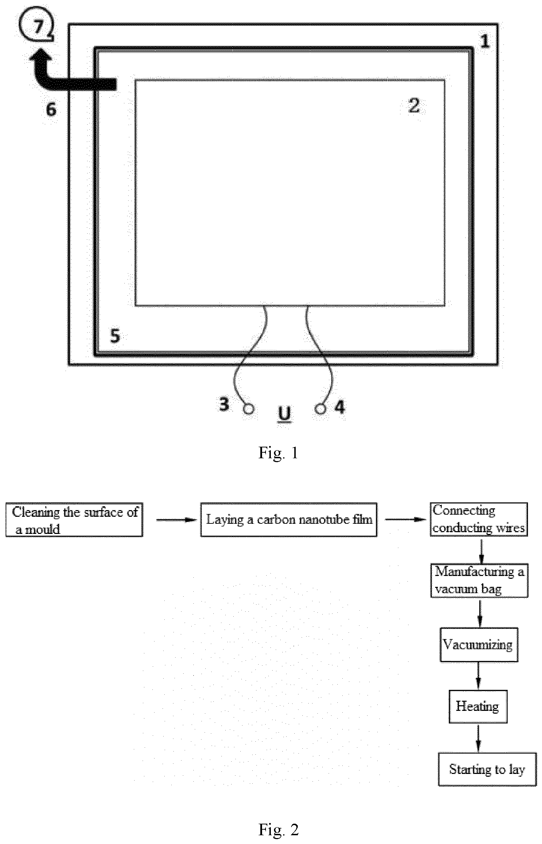

As shown in Fig. 1, the flexible non-metal heatable platform comprises an automatic laying mould 1, a carbon nanotube film 2, a first conducting wire 3, a second conducting wire 4 and a vacuum bag 5. One ends of the first conducting wire 3 and the second conducting wire 4 are connected with the edge of the carbon nanotube film 2, and the other ends of the first conducting wire 3 and the second conducting wire 4 are connected with the positive and negative electrodes of a power source respectively. The carbon nanotube film 2 can have an arbitrary area as long as it can cover a laying region when being placed on the automatic laying mould 1. The vacuum bag 5 covers the carbon nanotube film 2 and the automatic laying mould 1. One end of the vacuum pipeline 6 is connected with the vacuum bag 5, and the other end of the vacuum pipeline 6 is connected with a vacuumizing device 7. The vacuumizing device 7 can be an air pump or an air compression station. After the vacuum bag is vacuumized, the carbon nanotube film 2 is enabled to be fitted and fixed to the surface of the automatic laying mould 1.

A using process of the flexible non-metal heatable platform is shown as Fig. 2 and comprises the steps:
step 1: cleaning the surface of the automatic laying mould 1;
the surface of the mould is cleaned, that is, clean wiping cloth is adopted to dip alcohol to clean the surface of the mould, so that oil stains, dust and the like are removed, and the surface is kept clean;
step 2: placing the carbon nanotube film 2 on the automatic laying mould 1; placement of the carbon nanotube film requires the carbon nanotube film to flatly cover the laying region so as to be prevented from being folded and curled;
step 3: connecting the first conducting wire 3 and the second conducting wire 4;
one ends of the first conducting wire 3 and the second conducting wire 4 are connected with the edge of the carbon nanotube film 2, and the other ends of the first conducting wire 3 and the second conducting wire 4 are connected with the positive and negative electrodes of the power source respectively; and a pressure sensitive adhesive tape can be adopted for fixing when the conducting wires are connected with the edge of the carbon nanotube film;
step 4: manufacturing the vacuum bag 5;
the edge of the laying region on the automatic laying mould 1 is adhered with a sealant, the vacuum pipeline is adhered to the sealant, it should be noted that positions, passed by the sealant, of the conducting wires and the vacuum pipeline are sealed well, then, the vacuum bag is made to ensure that the tightness is good and no gas is leaked;
step 5: vacuumizing the vacuum bag 5 by the vacuumizing device 7 by virtue of the vacuum pipeline 6 so that the carbon nanotube film 2 is compacted by the vacuum bag 5 under the action of vacuum;
the surfaces of the carbon nanotube film 2 and the vacuum bag 5 are kept flat and unpleated; and the surface of the vacuum bag can be neatened in a vacuumizing process so as to be flat and unpleated;
step 6: turning on the power source to heat the carbon nanotube film 2 through the conducting wires;
the carbon nanotube film 2 is heated as required, for example, if a thermosetting prepreg is laid, heating is unnecessary as long as the ambient temperature is kept; if a thermoplastic prepreg or dry fiber is laid, the power source can be turned on to heat the carbon nanotube film 2 to a temperature required by a process.
step 7: starting a laying process to begin laying, laying a prepreg or dry fiber on the surface of the vacuum bag.

The present invention provides a flexible self-heating platform system for automatic laying based on a flexible carbon nanotube film with high heat conductivity, by which the surface design of an automatic laying tool is improved on the basis of the flexible carbon nanotube film with high heat conductivity, so that the surface of the laying tool is enabled to have a heating function, a difference of the laying tool and a laying process temperature is reduced, the viscosity of a material is increased, the laying effect is improved, the problems that the laying property of the first layer is poor and the first layer of laid material cannot be well fitted to the tool due to an overhigh difference of the surface temperature of an existing metal laying tool and a laying process temperature are solved, the reject rate can be reduced, the laying quality and efficiency can be increased, and the advantages of an automatic laying process can be exerted better.

In the present invention, a flexible ultralight carbon nanotube film with high heat conductivity, which is small in thickness (10 µm to 1 mm, controllable and adjustable), low in density (not higher than 1 g/cm³) and incapable of changing the original molding surface or gravity of the mould or generating other interference problems, is adopted as a functional layer. The flexible carbon nanotube film with high heat conductivity is good in flexibility and capable of well deforming to be fitted to the molding surface of the mould and can be used for complicated moulds with different structures so as to be wide in application range. The flexible carbon nanotube film is located between the mould and the vacuum bag and is small in thickness so as to be capable of obviously improving the laying effect without affecting the original laying surface. The flexible carbon nanotube film with high heat conductivity is high in heating speed (30 s to 10 min), controllable in temperature (the room temperature to 60 DEG C) and suitable for meeting laying process requirements of different material systems.

The flexible carbon nanotube film self-heating platform for assisting automatic laying provided by the embodiment of the present invention are introduced in detail above. The descriptions of the foregoing embodiments are merely intended to help understand the method and core concept of the present invention.

For example, some vocabularies are used in the description and claims to designate specific assemblies. It can be understood by the person skilled in the art that a hardware manufacturer may name the same assembly with different nouns. In the description and claims, a name difference is not used as an assembly distinguishing manner, but a difference of functions of the assemblies is used as a distinguishing criterion. For example, "comprising" or "comprises" mentioned in the entire description and claims is an open-type language so as to be explained as "comprising/comprises, but is not limited to". "Approximate" means that the person skilled in the art can solve the technical problems within a certain error range and basically achieve the technical effects within an acceptable error range. Preferred implementations for implementing the present invention will be described later in the description, however, the description is still intended to explain the general principle of the present invention, rather than to limit the scope of the present invention. The protective scope of the present invention shall be subject to the protective scope defined by the appended claims.

It should be further noted that terms "comprises", "comprising" or any other variants thereof are intended to cover non-excludable inclusion, so that a commodity or system comprising a series of elements not only comprises those elements, but also comprises other elements not listed clearly, or further comprises inherent elements of the commodity or system. Under the condition that no more limitations are provided, elements defined by the word "comprising a......"do not exclude other same elements further existing in the commodity or system comprising the elements.

It should be understood that a term "and/or" used herein only denotes an association relationship for describing associated objects and means that there may be three relationships, for example, A and/or B may denote the three situations that A exists alone, A and B exists at the same time, and B exists alone. In addition, the character "j" used herein generally denotes that forward and backward associated objects are in an "or" relationship.

## Claims

1. A flexible carbon nanotube film self-heating platform for assisting automatic laying, wherein the self-heating platform comprises an automatic laying mould (1), a carbon nanotube film (2) and a vacuum bag (5) which are sequentially laid from bottom to top; the carbon nanotube film (2) is connected with a power source by a conducting wire (3, 4); and the vacuum bag (5) is connected with a vacuumizing device by a pipeline (6),
wherein the carbon nanotube film (2) has an arbitrary area and covers a laying region of the automatic laying mould (1),
wherein in that the carbon nanotube film (2) has a thickness of 10 µm-1 mm and a density of lower than 1g/cm³.

2. The flexible carbon nanotube film self-heating platform for assisting automatic laying according to claim 1, wherein the vacuumizing device (7) is an air pump or an air compression station.

3. The flexible carbon nanotube film self-heating platform for assisting automatic laying according to claim 1, wherein the conducting wire (3, 4) is connected with an edge of the carbon nanotube film (2) by a pressure sensitive adhesive tape.

4. The flexible carbon nanotube film self-heating platform for assisting automatic laying according to claim 1, wherein the vacuum bag (5) is adhered to the automatic laying mould (1) by using a sealant and is configured to cover a region where the carbon nanotube film (2) is located.

5. A method using a flexible carbon nanotube film self-heating platform for assisting automatic laying, wherein the method comprises the steps:
S1, cleaning a surface of an automatic laying mould (1);
S2, laying a carbon nanotube film (2) on the surface of the automatic laying mould (1), and connecting the carbon nanotube film (2) with a power source by a conducting wire (3, 4);
S3, adhering and fixing a vacuum bag (5) to the surface of the automatic laying mould (1), and enabling the vacuum bag (5) to cover a region where the carbon nanotube film (2) is located;
S4, vacuumizing the vacuum bag (5);
S5, heating the carbon nanotube film (2) to a temperature required for laying; and
S6, starting a laying process for laying.

6. The method using a flexible carbon nanotube film self-heating platform for assisting automatic laying according to claim 5, wherein the carbon nanotube film (2) has an arbitrary area and covers a laying region of the automatic laying mould (1).

7. The method using a flexible carbon nanotube film self-heating platform for assisting automatic laying according to claim 5, wherein when a thermosetting material is laid, the temperature required for laying in step S5 is an ambient temperature, and the power source of the carbon nanotube film (2) is not turned on; and when a thermoplastic prepreg or dry fiber is laid, the power source is turned on to heat the carbon nanotube film (2) to a temperature required by the process.

8. The method using a flexible carbon nanotube film self-heating platform for assisting automatic laying according to claim 5, wherein the tightness between the vacuum bag (5) and the automatic laying mould (1) is required to be guaranteed when the vacuum bag (5) is adhered and fixed in step S3.

## Patentansprüche

1. Eine flexible Kohlenstoff-Nanoröhrenfolien-Selbstheizplattform zur Unterstützung automatischen Legens, wobei die Selbstheizplattform eine automatische Legeform (1), eine Kohlenstoff-Nanoröhrenfolie (2) und einen Vakuumbeutel (5) umfasst, die nacheinander von unten nach oben gelegt sind; wobei die Kohlenstoff-Nanoröhrenfolie (2) durch einen leitenden Draht (3, 4) mit einer Stromquelle verbunden ist; und der Vakuumbeutel (5) durch eine Rohrleitung (6) mit einer Vorrichtung zum Vakuumieren verbunden ist,
wobei die Kohlenstoff-Nanoröhrenfolie (2) eine beliebige Fläche hat und einen Legebereich der automatischen Legeform (1) abdeckt,
wobei die Kohlenstoff-Nanoröhrenfolie (2) eine Dicke von 10 µm-1 mm und eine Dichte von weniger als 1 g/cm3 aufweist.

2. Die flexible Kohlenstoff-Nanoröhrenfolien-Selbstheizplattform zur Unterstützung automatischen Legens gemäß Anspruch 1, wobei die Vorrichtung (7) zum Vakuumieren eine Luftpumpe oder eine Luftkompressionsstation ist.

3. Die flexible Kohlenstoff-Nanoröhrenfolien-Selbstheizplattform zur Unterstützung automatischen Legens gemäß Anspruch 1, wobei der leitende Draht (3, 4) mit einer Kante der Kohlenstoff-Nanoröhrenfolie (2) durch ein druckempfindliches Klebeband verbunden ist.

4. Die flexible Kohlenstoff-Nanoröhrenfolien-Selbstheizplattform zur Unterstützung automatischen Legens gemäß Anspruch 1, wobei der Vakuumbeutel (5) unter Verwendung eines Dichtungsmittels an die automatische Legeform (1) geklebt ist und dazu eingerichtet ist, einen Bereich abzudecken, in dem sich die Kohlenstoff-Nanoröhrenfolie (2) befindet.

5. Ein Verfahren, das eine flexible Kohlenstoff-Nanoröhrenfolien-Selbstheizplattform zur Unterstützung automatischen Legens verwendet, wobei das Verfahren die folgenden Schritte umfasst:
S1, Reinigen einer Oberfläche einer automatischen Legeform (1);
S2, Legen einer Kohlenstoff-Nanoröhrenfolie (2) auf die Oberfläche der automatischen Legeform (1) und Verbinden der Kohlenstoff-Nanoröhrenfolie (2) mit einer Stromquelle durch einen leitenden Draht (3, 4);
S3, Verkleben und Befestigen eines Vakuumbeutels (5) auf der Oberfläche der automatischen Legeform (1) und Ermöglichen, dass der Vakuumbeutel (5) einen Bereich abdeckt, in dem sich die Kohlenstoff-Nanoröhrenfolie (2) befindet;
S4, Vakuumieren des Vakuumbeutels (5);
S5, Erwärmen der Kohlenstoff-Nanoröhrenfolie (2) auf eine für das Legen erforderliche Temperatur; und
S6, Starten eines Legeprozesses zum Legen.

6. Das Verfahren, das eine flexible Kohlenstoff-Nanoröhrenfolien-Selbstheizplattform zur Unterstützung automatischen Legens verwendet gemäß Anspruch 5, wobei die Kohlenstoff-Nanoröhrenfolie (2) eine beliebige Fläche hat und einen Legebereich der automatischen Legeform (1) abdeckt.

7. Das Verfahren, das eine flexible Kohlenstoff-Nanoröhrenfolien-Selbstheizplattform zur Unterstützung automatischen Legens verwendet gemäß Anspruch 5, wobei, wenn ein wärmehärtendes Material gelegt wird, die für das Legen erforderliche Temperatur in Schritt S5 eine Umgebungstemperatur ist und die Stromquelle der Kohlenstoff-Nanoröhrenfolie (2) nicht eingeschaltet wird; und wenn ein thermoplastisches Prepreg oder eine trockene Faser verlegt wird, die Stromquelle eingeschaltet wird, um die Kohlenstoff-Nanoröhrenfolie (2) auf eine für den Prozess erforderliche Temperatur zu erhitzen.

8. Das Verfahren, das eine flexible Kohlenstoff-Nanoröhrenfolien-Selbstheizplattform zur Unterstützung automatischen Legens verwendet gemäß Anspruch 5, wobei die Dichtheit zwischen dem Vakuumbeutel (5) und der automatischen Legeform (1) beim Verkleben und Befestigen des Vakuumbeutels (5) in Schritt S3 gewährleistet sein muss.

## Revendications

1. Plate-forme de film de nanotubes de carbone auto-chauffante flexible pour assister à la pose automatique, dans laquelle la plate-forme auto-chauffante comprend un moule de pose automatique (1), un film de nanotubes de carbone (2) et un sac sous vide (5) qui sont posés séquentiellement de bas en haut ; le film de nanotubes de carbone (2) est relié à une source d'énergie par un fil conducteur (3, 4) ; et le sac sous vide (5) est relié à un dispositif de mise sous vide par une canalisation (6),
dans laquelle le film de nanotubes de carbone (2) a une surface arbitraire et couvre une zone de pose du moule de pose automatique (1),
**caractérisé en ce que** le film de nanotubes de carbone (2) a une épaisseur de 10 µm-1 mm et une densité inférieure à 1g/cm³.

2. Plate-forme de film de nanotubes de carbone auto-chauffante flexible pour assister à la pose automatique selon la revendication 1, dans laquelle le dispositif de mise sous vide (7) est une pompe à air ou une station de compression d'air.

3. Plate-forme de film de nanotubes de carbone auto-chauffante flexible pour assister à la pose automatique selon la revendication 1, dans laquelle le fil conducteur (3, 4) est relié à un bord du film de nanotubes de carbone (2) par une bande adhésive sensible à la pression.

4. Plate-forme de film de nanotubes de carbone auto-chauffante flexible pour assister à la pose automatique selon la revendication 1, dans laquelle le sac sous vide (5) est collé au moule de pose automatique (1) à l'aide d'un produit d'étanchéité et est configuré pour couvrir une région où le film de nanotubes de carbone (2) est situé.

5. Procédé utilisant une plate-forme de film de nanotubes de carbone auto-chauffante flexible pour assister à la pose automatique, dans lequel le procédé comprend les étapes suivantes :
S1, nettoyage d'une surface d'un moule de pose automatique (1) ;
S2, poser un film de nanotubes de carbone (2) sur la surface du moule de pose automatique (1) et relier le film de nanotubes de carbone (2) à une source d'énergie par un fil conducteur (3, 4) ;
S3, coller et fixer un sac sous vide (5) à la surface du moule de pose automatique (1), et permettre au sac sous vide (5) de couvrir une zone où le film de nanotubes de carbone (2) est situé ;
S4, miser sous vide le sac sous vide (5) ;
S5, chauffer le film de nanotubes de carbone (2) à une température requise pour poser ; et
S6, démarrer un processus de pose pour poser.

6. Procédé utilisant une plate-forme de film de nanotubes de carbone auto-chauffante flexible pour assister à la pose automatique selon la revendication 5, dans lequel le film de nanotubes de carbone (2) a une surface arbitraire et couvre une zone de pose du moule de pose automatique (1).

7. Procédé utilisant une plate-forme de film de nanotubes de carbone auto-chauffante flexible pour assister à la pose automatique selon la revendication 5, dans lequel, lorsqu'un matériau thermodurcissable est posé, la température requise pour poser à l'étape S5 est une température ambiante, et la source d'énergie du film de nanotubes de carbone (2) n'est pas allumée ; et lorsqu'un thermoplastique préimprégné ou une fibre sèche est posé, la source d'énergie est allumée pour chauffer le film de nanotubes de carbone (2) à une température requise par le procédé.

8. Procédé utilisant une plate-forme de film de nanotubes de carbone auto-chauffante flexible pour assister à la pose automatique selon la revendication 5, dans lequel l'étroitesse entre le sac sous vide (5) et le moule de pose automatique (1) est requis d'être garantie lorsque le sac sous vide (5) est collé et fixé à l'étape S3.
